# EUROPÄISCHE PATENTSCHRIFT

(11) **EP 0 619 765 B1**
(45) Veröffentlichungstag und Bekanntmachung des Hinweises auf die Patenterteilung: **22.05.1996**
(21) Anmeldenummer: 93901715.8
(22) Anmeldetag: 21.12.1992
(51) Int. Cl.: B09B 3/00

(54) **VORRICHTUNG ZUR THERMISCHEN BEHANDLUNG VON LOCKEREM GUT**
THERMAL TREATMENT DEVICE FOR LOOSE MATERIALS
DISPOSITIF DE TRAITEMENT THERMIQUE DE MATIERES MEUBLES

(30) Priorität: 31.12.1991 DE 4143260
(43) Veröffentlichungstag der Anmeldung: 19.10.1994
(73) Patentinhaber: REPNIK, Hermann, D-78315 Radolfzell (DE); ASTOR, Werner, D-78315 Radolfzell (DE)
(72) Erfinder: REPNIK, Hermann, D-78315 Radolfzell (DE); ASTOR, Werner, D-78315 Radolfzell (DE)
(74) Vertreter: Wallinger, Michael, Dr.-Ing.
(86) Internationale Anmeldenummer: EP9202969
(87) Internationale Veröffentlichungsnummer: WO9312895

(56) Entgegenhaltungen:
- DE-B- 1 176 782
- FR-A- 1 458 402
- US-A- 4 132 010

## Beschreibung

Die vorliegende Erfindung betrifft eine Vorrichtung zur thermischen Behandlung von lockerem Gut, wie z.B. Erde, Sand, Klärschlamm, Kies und dergleichen.

Eine derartige Vorrichtung kann z.B. zur Sterilisation von Pflanz-Erde in Gartenbaubetrieben usw. verwendet werden. Die zur Aufzucht von Pflanzen verwendete Erde ist nach dem Gebrauch durch Mikroorganismen, Pilze usw. verunreinigt. Diese Verunreinigungen beeinträchtigen das Pflanzenwachstum und müssen deshalb entfernt werden, bevor die Erde wiederverwendet werden kann.

Gartenbaubetriebe verwenden dafür üblicherweise eine Dämpfvorrichtung, die eine verschließbare Dämpfkammer mit einem Fassungsvermögen von z.B. 2 m³ Erde aufweist. In diese Dämpfkammer wird Heißdampf eingeleitet, der durch einen separaten Dampferzeuger hergestellt wird, wodurch die Erde erhitzt und die Mikroorganismen usw. abgetötet werden. Der Dämpfvorgang nimmt ungefähr zwei Stunden in Anspruch.

Diese bekannte Vorrichtung hat den Nachteil, daß sie, um einigermaßen wirtschaftlich zu arbeiten, eine große Dämpfkammer benötigt und dementsprechend groß und schwer gebaut ist. Weiterhin ist von Nachteil, daß der mögliche Durchsatz dieser Vorrichtung, trotz ihrer großen Abmessungen, relativ gering ist.

In der DE-OS 23 49 878 ist deshalb vorgeschlagen worden, die Dämpfkammer der vorstehend beschriebenen Vorrichtung durch ein Förderband zu ersetzen, welches sich quererstreckende plattenartige Förderschaufeln aufweist, die mit dem Förderband und einer Abdeckung jeweils einzelne Dämpfkammern bilden. In diese Dämpfkammern wird dann Dampf eingeleitet, welcher durch einen separaten Dampferzeuger erzeugt wird.

Diese Vorrichtung hat allerdings den Nachteil, daß der Zeitraum, welcher für den Dämpfvorgang verbleibt, relativ kurz ist, so daß die Gefahr besteht, daß die Erde nicht die für die Sterilisation erforderliche Temperatur erreicht. Weiterhin wird die Erde durch den Dampf angefeuchtet, wodurch sie zum Kleben neigt, was das Ausbringen der Erde und die weitere Verarbeitung erschweren kann.

Eine weitere Anwendung der eingangs beschriebenen Vorrichtung ist die thermische Dekontaminierung von Böden, die z.B. mit hochsiedenden oder schwer zersetzbaren organischen Schadstoffen beladen sind.

Eine derartige Vorrichtung ist mit der DE-OS 35 43 845 bekannt geworden. Bei dieser bekannten Vorrichtung wird das thermisch zu behandelnde Material in eine Drehtrommel eingefüllt und dort durch eine direkte Beflammung behandelt. Für die Beflammung wird Brennstoff und Sauerstoff oder ein sauerstoffhaltiges Gas in die Drehtrommel eingeblasen. Auch diese Vorrichtung hat den Nachteil, das sie sehr aufwendig und teuer ist.

Eine Vorrichtung zur thermischen Behandlung von lockerem Gut gemäß dem Oberbegriff des Anspruches 1 ist mit der DE-B-1 176 782 bekanntgeworden. Diese bekannte Vorrichtung ist zum Abbrennen ölverseuchter Erde vorgesehen und besteht aus einer horizontal angeordneten Förderrinne, welche durch eine Schwingungseinrichtung in Schwingung versetzt wird und der die verseuchte Erde über einen Trichter zugeführt wird. Zu beiden Seiten der Förderrinne sind Brenner angeordnet, deren Flammen gegen die Oberfläche der Erde gerichtet ist. In der Förderrinne sind weiterhin Rechen vorgesehen, welche die Erdschicht umwälzen, um die gesamte Erde der Beflammung zuzuführen.

Die FR-A-1 458 402 zeigt eine Vorrichtung zur Behandlung von pulverförmigen Erzeugnissen, bei welcher Wärme über Wärmestrahlung, Konvektion oder durch einen Kontakt mit dem Transportmittel übertragen werden kann. Die Vorrichtung weist eine schräg gestellte Schüttrinne auf, die mit einer Vielzahl von Stufen versehen ist, über die das Produkt geführt wird. Die Schüttrinne wird durch einen Rüttler in Schwingungsbewegungen versetzt.

Der vorliegenden Erfindung liegt deshalb die Aufgabe zugrunde, eine Vorrichtung und ein Verfahren für die thermische Behandlung von lockerem Gut, wie Erde, Sand, Klärschlamm, Kies und dgl., zu schaffen, welche einen einfachen Aufbau hat und eine wirtschaftliche thermische Behandlung derartiger Stoffe ermöglicht.

Diese Aufgabe wird erfindungsgemäß durch den Gegenstand des Anspruchs 1 gelöst.

Zu bevorzugende Weiterbildungen der erfindungsgemäßen Vorrichtung sind Gegenstand der Unteransprüche.

Die erfindungsgemäße Vorrichtung ist mit einer Aufnahmeeinrichtung versehen, welche als Flächenanordnung ausgebildet ist und zumindest einen Flächenabschnitt aufweist, der in bezug auf die Horizontale geneigt ist. Die Aufnahmeeinrichtung insgesamt oder dieser horizontal geneigte Flächenabschnitt wird durch eine Schwingungs-Erzeugungseinrichtung, vorzugsweise einen Magnetschwinger oder ein Unwuchtmotor, in Schwingung versetzt. Die erfindungsgemäße Vorrichtung weist weiterhin eine Zuführeinrichtung auf, durch welche das zu behandelnde Gut dieser Aufnahmeeinrichtung und dem zumindest einen geneigten Flächenabschnitt zugeführt wird. Durch die Neigung des Flächenabschnittes und die Schwingungsbewegung gleitet das lockere Gut in Richtung der Neigung den Flächenabschnitt entlang. Oberhalb dieses Flächenabschnittes ist eine Brennereinrichtung vorgesehen, deren Flamme unmittelbar auf das zu behandelnde Gut gerichtet ist. Dadurch wird das zu behandelnde Gut erhitzt.

Unter dem Begriff "lockeres Gut" sollen hier alle schüttfähigen und rieselfähigen Stoffe verstanden werden, deren Struktur so beschaffen ist, daß die Stoffe unter dem Einfluß der Schwerkraft und der Vibration eine strömungsartige Bewegung ausführen. Der Begriff "lockeres Gut" soll auch jene Stoffe umfassen, die üblicherweise nicht schütt- oder rieselfähig sind, die aber durch eine entsprechende Vorrichtung, wie beispielsweise eine handelsübliche Vorrichtung zum Zerkleinern von Erdreich, in eine schütt- und/oder rieselfähige Form gebracht werden können. Weiterhin soll der Begriff "lockeres Gut" auch Stoffe unterschiedlichen Feuchtigkeitsgehaltes, d.h. sowohl trockene als auch feuchte Stoffe umfassen.

Die erfindungsgemäße Vorrichtung eignet sich besonders zur Sterilisation von Erde. Da der Bauaufwand der erfindungsgemäßen Vorrichtung deutlich geringer ist als der für eine Dämpfvorrichtung oder eine Drehtrommel erforderliche Aufwand, kann die Einrichtung unmittelbar zum jeweiligen Einsatzort transportiert werden. Da die Erde weiterhin unmittelbar durch die Flamme der Brennereinrichtung geführt wird, wird sie sehr schnell auf die für die Sterilisation erforderliche Temperatur gebracht. Dadurch ist der pro Zeiteinheit erzielbare Durchsatz um ein Mehrfaches höher als bei konventionellen Dämpfanlagen.

Im wesentlichen Unterschied zur Verwendung einer Dämpfeinrichtung mit einer Dämpfkammer erfolgt das Verfahren kontinuierlich. Das zu behandelnde Gut wird über die Zuführeinrichtung ständig der Aufnahmeeinrichtung zugeführt und kann nach dem Durchlaufen der Flamme der Brennereinrichtung unmittelbar der Vorrichtung entnommen werden.

Eine weitere wichtige Anwendung der erfindungsgemäßen Vorrichtung ist das Sterilisieren von Sand. Zahlreiche Untersuchungen der Qualität des Sandes von Sandkästen in Kindergärten, öffentlichen Kinderspielplätzen usw. haben gezeigt, daß auch frischer Sand nach kurzer Gebrauchsdauer in hohem Maße durch Mikroorganismen verunreinigt ist, die z.B. durch tierische und menschliche Exkremente in den Sand gelangen. Diese Verunreinigungen stellen eine erhebliche Gesundheitsgefahr für Kleinkinder dar, die diesen Sand zum Spielen benutzen.

Die erfindungsgemäße Vorrichtung eignet sich besonders gut, derartigen Sand so zu behandeln, daß sämtliche Mikroorganismen zuverlässig abgetötet werden.

Die erfindungsgemäße Vorrichtung ist weiter besonders dafür geeignet, Klärschlamm, wie er z.B. in großen Mengen beim Betrieb von Kläranlagen anfällt, zu trocknen. Klärschlamm hat üblicherweise einen hohen Feuchtigkeitsgehalt und muß deshalb vor der Weiterverarbeitung oder vor einer etwaigen Deponierung getrocknet werden. Der Klärschlamm wird dazu vorzugsweise über eine Zerkleinerungseinrichtung der erfindungsgemäßen Vorrichtung zugeführt und wird dort getrocknet. Dabei werden gleichzeitig auch vorhandene Mikroorganismen abgetötet.

Weiterhin eignet sich die erfindungsgemäße Vorrichtung dafür, kontaminierte Böden aufzuarbeiten. Dabei kann man, wie auch bei den übrigen, vorstehend beschriebenen Verwendungsmöglichkeiten, eine Einrichtung vorsehen, durch welche eventuell bei der Beflammung entstehenden Gase aufgefangen und weiterbehandelt werden können, um einen unkontrollierten Austritt von umweltbelastenden Gasen zu verhindern.

Die Brennereinrichtung muß so dimensioniert werden, daß die insgesamt erzeugte Wärmemenge ausreichend ist, um das zu behandelnde Gut auf die gewünschte Temperatur zu erhitzen. Dabei können sowohl mit flüssigen Brennstoffen als auch mit gasförmigen Brennstoffen betriebene Brennereinrichtungen angewendet werden. Als besonders vorteilhaft hat sich jedoch die Verwendung von Brennereinrichtungen gezeigt, die mit einem brennbaren Gas-Luft- oder Gas-Sauerstoff-Gemisch betrieben werden. Vorzugsweise wird die Brennereinrichtung dabei so gestaltet, daß sie eine oder mehrere Brennerleisten aufweist, die im wesentlichen quer zur Bewegungsrichtung des zu behandelnden Gutes über der Aufnahmeeinrichtung angeordnet sind. Die Brennerleisten haben vorzugsweise eine Vielzahl von Gasaustrittsöffnungen, so daß eine gleichmäßige Wärmeentwicklung über die gesamte Breite des Flächenabschnittes möglich ist. Besonders bevorzugt ist die Verwendung von Brennern, welche eine Vielzahl von einzelnen, nebeneinander angeordneten Brennerköpfen aufweisen, die über einen gemeinsamen Versorgungskanal mit einem brennbaren Gas-Luft- oder Gas-Sauerstoff-Gemisch versorgt werden.

Versuche haben gezeigt, daß es besonders zu bevorzugen ist, den Flächenabschnitt der Aufnahmeeinrichtung um ca. 10° zur Horizontalen zu neigen, wenn lockere Erde behandelt wird. Dieser Flächenabschnitt, der im wesentlichen entlang der Längsrichtung der Aufnahmeeinrichtung geneigt ist, kann eine Platte aufweisen, die aus Metall, bevorzugt aus Stahl, besteht, um den Temperaturen der Flammen standzuhalten. Statt der Verwendung einer Stahlplatte ist auch die Verwendung einer Keramikplatte oder einer mit Keramik beschichteten Stahlplatte möglich.

Gemäß einer bevorzugten Ausführungsform der erfindungsgemäßen Vorrichtung weist die Aufnahmeeinrichtung zwei oder mehr Flächenabschnitte auf, die jeweils durch eine Stufe voneinander getrennt sind. Die Stufe bewirkt, daß das zu behandelnde Gut in einer besonders definierten Strömungsweise vom ersten Flächenabschnitt zum zweiten Flächenabschnitt strömt. Wenn nun gemäß einer weiteren bevorzugten Ausführungsform die Brennereinrichtung unmittelbar im Bereich dieser Stufe angebracht wird, wird eine besonders gleichmäßige und gut reproduzierbare Wärmeeinleitung in das zu behandelnde Gut erzielt.

Die Zuführeinrichtung, welche der Aufnahmeeinrichtung im wesentlichen kontinuierlich das behandelnde Gut zuführt, wird vorzugsweise so ausgestaltet, daß pro Zeiteinheit eine vorbestimmte Menge des zu behandelnden Gutes gleichmäßig über die Breite der Aufnahmeeinrichtung zugeführt wird.

Gemäß einer anderen bevorzugten Ausführungsform geschieht die Zufuhr des zu behandelnden Gutes dosierbar, so daß die Menge des zugeführten Gutes veränderlich ist.

Wenn die pro Zeiteinheit zugeführte Menge des zu behandelnden Gutes gesteuert werden kann, wird diese Steuerung vorzugsweise in einem geschlossenen Regelkreislauf durchgeführt. Dies kann geschehen, indem durch entsprechende Sensoren überprüft wird, wie dick die auf dem geneigten Flächenabschnitt befindliche Schicht des Gutes ist. Sobald die Schichtdicke von einem vorbestimmten Wert abweicht, wird die zugeführte Menge je nach Abweichung erhöht oder erniedrigt.

Die pro Zeiteinheit zugeführte Menge kann auch über die Zuführeinrichtung gesteuert werden. Falls die Zuführeinrichtung einen Einfülltrichter aufweist, werden gemäß einer bevorzugten Ausführungsform im Einfülltrichter Sensoren angeordnet, die den Füllstand des Einfülltrichters anzeigen. Die Zufuhr von Gut in den Einfülltrichter, bei der bevorzugten Ausführungsform mittels eines Förderbandes, wird gestoppt, sobald die Menge des Gutes im Einfülltrichter einen vorbestimmten Grenzwert übersteigt und wieder gestartet, sobald diese Menge unterhalb eines vorbestimmten Grenzwertes liegt.

Besonders zu bevorzugen ist jedoch eine Temperaturregelung.

Für diese Temperaturregelung werden Temperatursensoren verwendet, die in der Aufnahmeeinrichtung angeordnet sind und welche z.B. die Temperatur des geneigten Flächenabschnittes in der Nähe oder nach der Brennereinrichtung erfassen, oder aber die Temperatur des zu behandelnden Gutes nach dem Durchlauf der Brennereinrichtung.

Falls die gemessenen Temperaturen über einem vorgegebenen Grenzwert liegen, kann mehr Gut pro Zeiteinheit zugeführt werden. Liegen die gemessenen Temperaturen unter diesem Grenzwert, wird die pro Zeiteinheit zugeführte Menge des zu behandelnden Gutes vermindert.

Eine entsprechende Regelung kann auch, sowohl bei einer nicht gesteuerten Zuführung als auch bei einer gesteuerten Zuführung, mit der Brennereinrichtung erfolgen. In diesem Fall wird die dem Brenner zugeführte Gasmenge erhöht, wenn die gemessenen Temperaturen unter den Grenzwert absinken und umgekehrt.

Durch die temperaturbezogene Regelung, die über die zugeführte Menge und/oder die Brennerleistung erfolgt, ist sichergestellt, daß die innerhalb der Vorrichtung erzielten Temperaturen ausreichen, um den gewünschten Erfolg der thermischen Behandlung sicherzustellen.

Damit ist eine sichere Funktion der erfindungsgemäßen Vorrichtung gewährleistet, ohne daß zu deren Bedienung besonders qualifizierte Fachkräfte erforderlich sind.

Die besten Ergebnisse werden mit dem erfindungsgemäßen Verfahren erzielt, wenn das zu behandelnde Gut mit einer im wesentlichen gleichbleibenden Geschwindigkeit den oder die geneigten Flächenabschnitte entlanggleitet. Diese gleichmäßige Bewegung wird insbesondere dann erreicht, wenn das zu bearbeitende Material hinsichtlich seiner Beschaffenheit, z.B. der Korngröße usw., einigermaßen homogen ist. Der Zuführeinrichtung wird deshalb vorzugsweise eine Verkleinerungsvorrichtung vorgeschaltet, welche z.B. die dem Pflanzbeet entnommene Erde auf eine vorgegebene Korngröße verkleinert. Derartige Zerkleinerungseinrichtungen, die teilweise eine Einstellung der Korngröße zulassen, sind im Handel erhältlich. Vorzugsweise wird die Zerkleinerungseinrichtung dann unmittelbar über eine entsprechende Fördereinrichtung, z.B. ein Förderband od. dgl., mit der Zuführeinrichtung verbunden. Zerkleinerungseinrichtung und Zuführeinrichtung können auch als Einheit ausgebildet werden.

Weitere Vorteile, Merkmale und Anwendungsmöglichkeiten der vorliegenden Erfindung ergeben sich aus der nachfolgenden Beschreibung mit Bezug zur beigefügten Zeichnung. Darin zeigen in schematisierter Weise:
- Fig. 1: eine seitliche Schnittansicht eines ersten Ausführungsbeispiels der erfindungsgemäßen Vorrichtung, entlang der Linie I-I in Fig. 2 gesehen;
- Fig. 2: eine schematische Aufsicht auf das Ausführungsbeispiel gemäß Fig. 1, wobei diese Einrichtung oberhalb der Dosierwalze geschnitten ist;
- Fig. 3: einen Teilschnitt des Ausführungsbeispiels gemäß Fig. 1, wobei der Schnitt quer zur Bewegungsrichtung des zu behandelnden Gutes erfolgt;
- Fig. 4: eine perspektivische Ansicht der Dosierwalze für das Ausführungsbeispiel gemäß Fig. 1;
- Fig. 5: ein Blockschaltbild einer Steuereinrichtung zum Steuern der Vorrichtung gemäß dem Ausführungsbeispiel der Fig. 1 bis 4;
- Fig. 6: eine Prinzipdarstellung zur Erläutung der Funktion des Ausführungsbeispiels gemäß den Fig. 1 bis 5;
- Fig. 7: ein alternatives Ausführungsbeispiel der Stufenplatte 14 gemäß dem Ausführungsbeispiel der Fig. 1 bis 5; und
- Fig. 8: ein alternatives Ausführungsbeispiel der Stufenplatte 14 gemäß dem Ausführungsbeispiel der Fig. 1 bis 5.

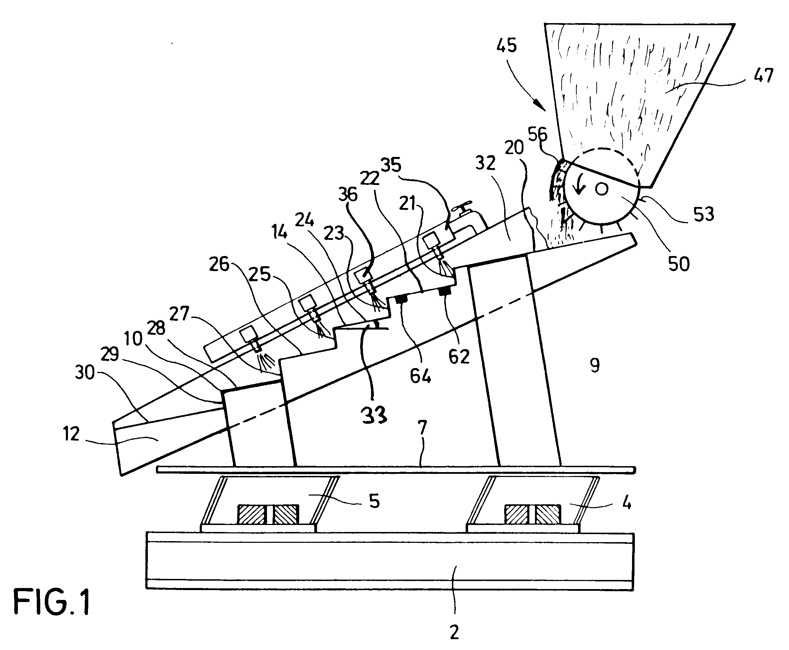

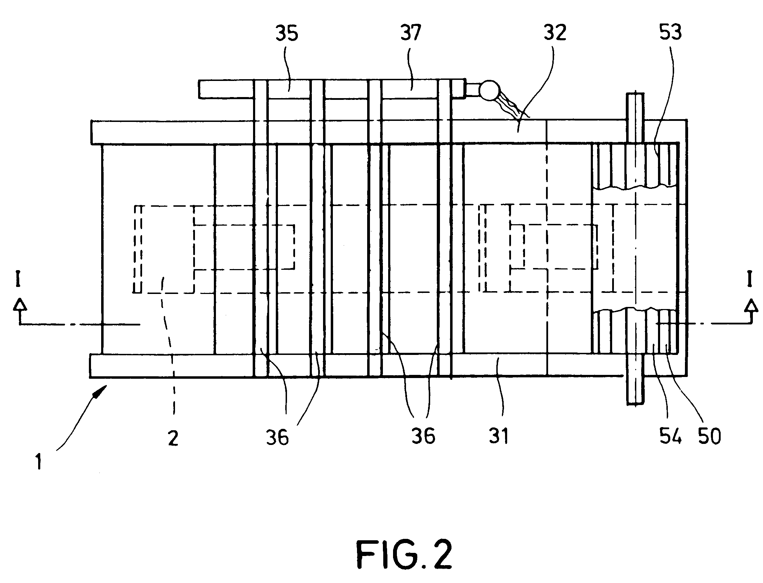

Ein Ausführungsbeispiel der erfindungsgemäßen Vorrichtung wird nun in bezug auf die Fig. 1 bis 3 beschrieben. Dieses Ausführungsbeispiel ist als mobile Erdsterilisations-Einrichtung konzipiert, kann jedoch in gleicher Bauweise auch als Einrichtung zur Sterilisation von Sand und als Einrichtung zur thermischen Behandlung von kontaminierter Erde eingesetzt werden.

Das dargestellte Ausführungsbeispiel weist ein in der Zeichnung nicht näher dargestelltes Hauptgestell 1 auf, an welchem eine Stabilisierungsmasse 2, z.B. durch Schweißen, befestigt ist. Die Stabilisierungsmasse 2 besteht beim Ausführungsbeispiel aus einem I-Träger.

Auf diesem I-Träger sind zwei handelsübliche Magnetschwingkörper 4, 5 befestigt, welche durch eine von außen angelegte elektrische Spannung beaufschlagt werden und dann mit einer vorgegebenen Frequenz schwingen. Die Magnetschwingkörper schwingen bevorzugt mit einer Frequenz zwischen 20 und 100 Hz, besonders bevorzugt ist eine Frequenz von etwa 50 Hz. Statt dieser Magnetschwingkörper können auch andere schwingungerzeugende Einrichtungen, wie z.B. Unwuchtmotoren od.dgl., verwendet werden.

Auf den Magnetschwingkörpern ist ein Flachträger 7 mittels einer Schraubverbindung befestigt, an dem zwei Stützen 9, 10 angeordnet sind, welche die Aufnahmeeinrichtung 12 tragen. Die Stützen 9 und 10 sind als Vierkantrohre ausgebildet. Es hat sich als günstig herausgestellt, diese Stützen im gleichen Winkel zu neigen, wie die Flächenabschnitte der Aufnahmeeinrichtung. Statt dieser geneigten Anordnung ist aber auch eine senkrechte Anordnung der Stützen 9 und 10 möglich.

Die Aufnahmeeinrichtung 12 weist eine Stufenplatte 14 auf, deren Gesamtlänge beim Ausführungsbeispiel 1,4 m beträgt. Die Breite der Stufenplatte ist beim Ausführungsbeispiel 0,5 m.

Die Stufenplatte weist einen ersten Flächenabschnitt 20, eine sich daran anschließende erste Stufe 21, einen sich daran anschließenden zweiten Flächenabschnitt 22, eine daran anschließende Stufe 23, einen daran sich anschließenden dritten Flächenabschnitt 24, eine sich daran anschließende Stufe 25, einen sich daran anschließenden vierten Flächenabschnitt 26, eine sich daran anschließende Stufe 27, einen sich daran anschließenden fünften Flächenabschnitt 28, eine sich daran anschließende fünfte Stufe 29 sowie einen sich daran anschließenden sechsten Flächenabschnitt 30 auf. Die ersten bis fünften Flächenabschnitte sind parallel zueinander angeordnet und um 10° zur Horizontalen geneigt, wie dies durch den Winkel 33 bei dem dritten Flächenabschnitt 24 dargestellt ist.

Die Stufen erstrecken sich jeweils senkrecht zu den zugeordneten Flächenabschnitten und haben beim Ausführungsbeispiel eine Höhe von 3,5 cm. Die Stufenplatte ist insgesamt aus Stahl gefertigt.

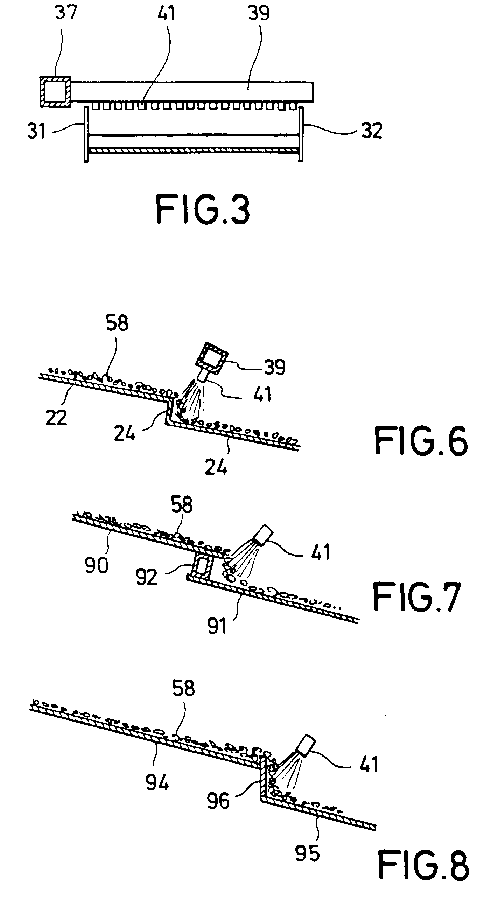

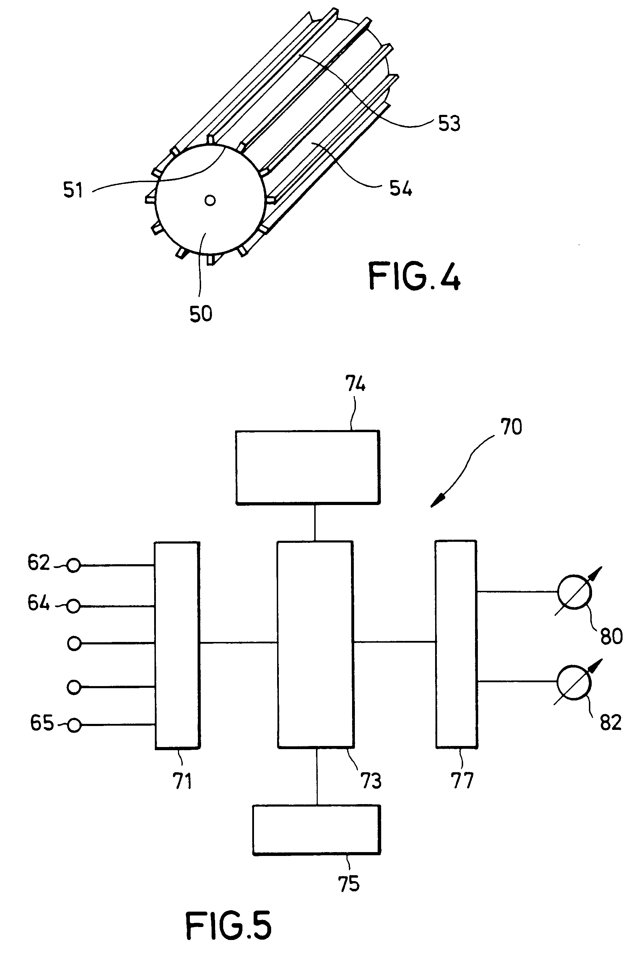

Wie insbesondere aus Fig. 3 ersichtlich ist, sind zu beiden Seiten der Stufenplatte Seitenwangen 31, 32 angeordnet, welche verhindern, daß zu behandelndes Gut zur Seite hin abrutschen kann.

Über der Stufenplatte 14 ist die Brennereinrichtung 35 angeordnet, welche im vorliegenden Fall vier Brennerleisten 36 aufweist, die über ein gemeinsames Gasversorgungsrohr 37 miteinander verbunden sind. Das Gasversorgungsrohr 37 ist über entsprechende Ventile usw. mit einer Gasversorgungseinrichtung verbunden, die beispielsweise aus einer Druckgasflasche und einer Druckluftflasche besteht. Das brennbare Gas und die Luft werden in einem vorbestimmten Verhältnis miteinander gemischt und über eine Druckregeleinrichtung dem Rohr 37 zugeführt.

Jede Brennerleiste 36 besteht aus einem an einer Seite geschlossenen Vierkantrohr 39, welches an der anderen Seite mit dem Gaszuführungsrohr 37 derart verbunden ist, daß eine Gasströmungsverbindung zwischen dem Zuführrohr und der Brennerleiste besteht. In die Brennerleiste sind eine Vielzahl von einzelnen Brennerdüsen 41 eingeschraubt, welche als sogenannte Zweikammerdüsen gestaltet sind. Bei diesem Düsentyp dient die zugeführte Gasmenge gleichzeitig dazu, die Düsen zu kühlen. Durch diese Bauweise läßt sich eine Flammtemperatur von über 1500 °C erreichen.

Die insgesamt mit 45 bezeichnete Zuführeinrichtung ist oberhalb der Stufenplatte 14 und zwar über dem ersten Flächenabschnitt 20 angeordnet. Die Zuführeinrichtung 45 weist einen Einfülltrichter 47 auf, in welchen das zu behandelnde Gut eingeführt wird. Dem Einfülltrichter ist vorzugsweise ein handelsüblicher Zerkleinerer vorgeschaltet, der das zu behandelnde Gut mit einer vorgegebenen, einstellbaren Korngröße zerkleinert. Der Zerkleinerer kann unmittelbar, beispielsweise mittels eines Förderbandes, mit dem Einfülltrichter verbunden werden. Zerkleinerer und Einfülltrichter können auch miteinander kombiniert werden, indem die Zerkleinerungseinrichtung unmittelbar in den Einfülltrichter integriert wird.

Im unteren Endbereich des Einfülltrichters ist eine Dosierwalze 50 drehbar gelagert, die über einen Elektromotor mit veränderbarer Drehzahl angetrieben wird. Die Dosierwalze 50 weist einen z.B. aus Stahlblech bestehenden zylindrischen Körper 51 auf, dessen Zylinderachse gleichzeitig die Drehachse der Dosierwalze bildet. Parallel zur Zylinderachse sind eine Vielzahl von flachen Platten 53 um den Umfang des Zylinders verteilt, zwischen denen jeweils Kammern 54 ausgebildet sind. Der Einfülltrichter weist weiterhin an seiner unteren Seite ein zylindrisch gestaltetes Abstreifblech 56 auf, dessen Zylinderradius dem Radius der Außenkanten der Platten der Dosiertrommel entspricht. Die Breite der Dosiertrommel entspricht im wesentlichen der Breite des Stufenbleches 14.

Bei einer alternativen Ausführungsform, die in ihrem Aufbau ansonsten der Vorrichtung gemäß Fig. 1 entspricht, kann die Dosierwalze 50 weggelassen werden. In diesem Fall werden statt der Dosierwalze im Einfülltrichter 47 Sensoren angeordnet, die den Füllstand des Gutes im Einfülltrichter erfassen. Diese Sensoren geben ein elektrisches Signal aus, über das durch eine (nicht dargestellte) Steuereinrichtung ein Förderband gesteuert wird, welches das Material dem Einfülltrichter 47 zuführt. Sobald die im Einfülltrichter befindliche Menge einen vorgegebenen Grenzwert übersteigt, wird das Förderband gestoppt. Die im Einfülltrichter 47 befindliche Menge wird dann nach und nach durch die Schwerkraft auf die Flächenanordnung aufgebracht, bis die im Einfülltrichter vorhandene Menge einen unteren Grenzwert erreicht. Das Förderband wird dann wieder gestartet und führt das Gut dann wieder dem Einfülltrichter 47 zu. Bei diesem Ausführungsbeispiel geschieht die Zufuhr des lockeren Gutes vom Trichter aus auf den ersten Flächenabschnitt 20 ausschließlich über die Schwerkraft. Der Trichter ist dafür so angeordnet, daß seine untere Randbegrenzung verhältnismäßig dicht über der Platte 20 angeordnet ist und im wesentlichen zu dieser parallel ist, so daß durch die gemeinsame Wirkung von Schwerkraft und dem Einfluß der Rüttelbewegung der Platte 20 ein kontinuierlicher Fluß von Material erfolgt.

Zur Temperaturüberwachung der Vorrichtung sind eine Anzahl von Temperatursensoren vorgesehen, die entweder unmittelbar in die Stufenplatte eingelassen sind, oder die an der Unterseite der Stufenplatte angeordnet sind. Die Temperatursensoren 62 sind in dem Bereich angeordnet, in dem die Brennerflamme auf die Stufenplatte trifft. Weiterhin können Temperatursensoren auch in dem von der Brennerplatte unbelasteten Bereich der Stufenplatte vorgesehen sein, was mit dem Bezugszeichen 64 angedeutet ist.

Zur Temperaturregelung der Vorrichtung ist eine Steuereinrichtung vorgesehen, die insgesamt mit 70 bezeichnet ist. Diese Steuereinrichtung weist eine Signalverarbeitungseinrichtung 71 auf, der die Signale der Temperatursensoren 62 und/oder 64, sowie das Signal eines Drehzahlgebers 65 zugeführt wird, der mit der Dosierwalze verbunden ist und deren Drehzahl erfaßt. In der Signalverarbeitungseinrichtung werden die empfangenen Signale verstärkt und digitalisiert.

Die Signalverarbeitungseinrichtung 71 ist mit einer Mikroprozessoreinrichtung 73 verbunden, welche über ein im Speicher 74 gespeichertes Programm gesteuert wird. Die Mikroprozessoreinrichtung 73 ist weiterhin mit Einund Ausgabeeinrichtungen 75 versehen. Die Mikroprozessoreinrichtung generiert Steuersignale, die über eine Steuersignalverarbeitungseinrichtung 77 einer oder mehreren Gasregeleinrichtungen 80 und einer Drehzahlregeleinrichtung 82 zugeführt werden.

Die Funktion dieser Vorrichtung wird nun anhand der Fig. 1 bis 6 in bezug auf die Erdsterilisation erläutert. Bei der Anwendung der Vorrichtung z.B. zur Sterilisation von Spielsand und dgl. ist die Funktion entsprechend.

Die von einem Zerkleinerer feinkörnig zerkleinerte Erde wird mittels eines Förderbandes in den Einfülltrichter eingefüllt, wobei gleichzeitig die Stufenplatte durch die schwingungserzeugenden Einrichtungen in Schwingung versetzt wird. Dabei ist die Zuführgeschwindigkeit so bemessen, daß zumindest der untere Bereich des Einfülltrichters mit Erde gefüllt ist. Die Erde legt sich an die Dosierwalze 50 an und füllt die zwischen den Platten 53 angeordneten Kammern 54 aus. Durch die Drehung der Dosierwalze, die in der Darstellung gemäß Fig. 1 entgegen dem Uhrzeigersinn erfolgt, wird die in den Kammern 54 befindliche Erde aus dem Einfülltrichter befördert und fällt auf den ersten Flächenabschnitt 20 der Stufenplatte 14. Dabei verhindert das Abstreifblech 56, daß mehr Erde aus dem Einfülltrichter befördert wird, als dem Volumen der Kammer 54 pro entsprechender Winkelbewegung der Dosierwalze entspricht.

Aufgrund der Konstruktion der Dosierwalze, die zudem die gleiche Breite hat wie die Stufenplatte 14, ist gewährleistet, daß die Erde völlig gleichmäßig über die gesamte Breite der Stufenplatte aufgebracht wird. Durch die Vibration der Stufenplatte bildet sich eine gleichmäßige dicke Schicht aus, die durch die Neigung der einzelnen Flächenabschnitte der Stufenabschnitte sich langsam nach unten, d.h. in Fig. 1 nach links, bewegt.

Wie in Fig. 6 schematisch dargestellt ist, befindet sich die Erde 58 beim Über laufen der Stufen in direktem Kontakt mit der Brennerflamme. Dadurch wird die Erde sehr stark erhitzt und die Mikroorganismen, Pilze usw. abgetötet.

Beim Ausführungsbeispiel sind vier Brenner leisten hintereinander geschaltet, so daß die einzelnen Erdteilchen viermal dem Erhitzungsprozeß ausgesetzt sind. Dadurch wird eine sehr zuverlässige Sterilisation bewirkt.

Durch die auf der Stufenplatte entlanggleitenden Erdschicht wird außerdem die Stufenplatte selbst vor übermäßiger Erwärmung geschützt. Es ist deshalb möglich, die Stufenplatte aus Stahlblech auszuführen. Stattdessen kann aber auch ein keramisches Material oder eine keramisch beschichtete Platte Verwendung finden.

Am unteren, d.h. in Fig. 1 linken Ende der Stufenplatte fällt die Erde von der Stufenplatte und kann gesammelt oder über eine weitere Fördereinrichtung abtransportiert werden.

Versuche haben gezeigt, daß die Vorrichtung in der hier beschriebenen Art auch ohne Verwendung einer Steuereinrichtung funktioniert, so daß die Vorrichtung preisgünstig für Gartenbaubetriebe od.dgl. zur Verfügung gestellt werden kann.

Die Verwendung der beschriebenen Steuereinrichtung hat jedoch den Vorteil, daß damit ein optimaler Wirkungsgrad und ein optimaler Durchsatz für die Anlage erzielt werden kann.

Durch die Steuereinrichtung wird unmittelbar die Menge der zugeführten Erde und die Brennerleistung beeinflußt. Wenn die mit den Temperatursensoren 62, 64 gemessenen Temperaturen unter vorbestimmten Grenzwerten liegen, ist entweder die Brennerleistung zu gering, oder die von der Dosierwalze geförderte Erdmenge zu groß. Die Steuereinrichtung erhöht dann zunächst die Brennerleistung bis zum maximalen Wert und reduziert dann, falls dies nicht ausreicht, um die gewünschte Temperatur zu erreichen, die Drehzahl der Dosierwalze und damit die pro Zeiteinheit zugeführte Erdmenge.

Ist die Temperatur zu hoch, wird die Drehzahl der Dosierwalze erhöht und damit die Dicke der Erdschicht auf der Stufenplatte erhöht. Falls dies nicht ausreicht, oder falls durch sonstige Einflüsse die Temperatur der Stufenplatte zu hoch wird, wird die Leistung der Brennereinrichtung entsprechend reduziert, wodurch auch Beschädigungen der Stufenplatte vermieden werden.

Statt der vorbeschriebenen Steuereinrichtung kann auch eine Steuereinrichtung verwendet werden, bei der lediglich ein Temperaturgrenzschalter zur Abschaltung der Brennereinrichtung bei zu hohen Temperaturen vorgesehen ist, und die Steuerung der Temperatur ausschließlich über die Drehzahlregelung der Dosierwalze erfolgt.

Die Leistungsfähigkeit des vorbeschriebenen Ausführungsbeispiels wurde durch Vergleichsversuche überprüft.

Dabei wurde ein erster Teil einer Erdprobe in einer üblichen Dämpfeinrichtung zwei Stunden bei 100 °C behandelt. Ein zweiter Teil der Probe wurde mit der erfindungsgemäßen Vorrichtung behandelt. Der Rest der Probe blieb ohne Behandlung.

Bei der Untersuchung in einem unabhängigen biologischen Institut wurde festgestellt, daß in der unbehandelten Erde Pilze der Gattungen Rhizopus, Mucor, Verticillium vorhanden waren. In der erfindungsgemäß flammbehandelten Erdprobe und in der gedämpften Erdprobe waren diese nicht mehr nachzuweisen.

Während sich aus der unbehandelten Erdprobe Unkrautpflanzen entwickelten, konnte auf der gedämpften Erde und der flammbehandelten Erde kein Pflanzenwachstum beobachtet werden.

Unter Bezugnahme auf die Fig. 7 und 8 werden nun zwei alternative Ausführungsbeispiele der Stufenplatte 14 beschrieben.

Beim Ausführungsbeispiel gemäß der Fig. 7 weist die Stufenplatte einen ersten Flächenabschnitt 90 auf, der um 10° zur Horizontalen geneigt ist, und zu dem ein zweiter Flächenabschnitt 91 parallel angeordnet ist. Die beiden Flächenabschnitte sind mit einem Vierkantprofil 92 miteinander verschweißt. Dabei steht der erste Flächenabschnitt 90 um ein Stück über das Vierkantprofil 92 hinaus, so daß sich eine freie Fallmöglichkeit für die darüber strömende Erde ergibt, wie dies in Fig. 7 schematisch dargestellt ist.

Beim Ausführungsbeispiel gemäß Fig. 8 weist die Stufenplatte einen ersten Flächenabschnitt 94 und einen dazu parallel angeordneten zweiten Flächenabschnitt 95 auf. Beide Flächenabschnitte sind um 10° zur Horizontalen geneigt.

Der erste Flächenabschnitt und der zweite Flächenabschnitt sind mit einer senkrechten Platte 96 miteinander verbunden, die über die Oberfläche des ersten Flächenabschnittes 94 hinausragt. Dadurch bildet sich, wie in Fig. 8 schematisch dargestellt ist, ein Vorsprung, der die an der Oberfläche des Flächenabschnittes 94 entlanggleitende Erde 58 zunächst stoppt. Sobald ein gewisses Niveau erreicht ist, können die oberen Körner der Erde durch die Vibration der Stufenplatte diese Sperreinrichtung überwinden und auf die Stufenplatte 95 fallen.

Es wird darauf hingewiesen, daß die Platte 96 nicht unbedingt in Vertikalrichtung angeordnet sein muß. Sie kann auch senkrecht zum Flächenabschnitt 95 angeordnet sein, d.h. ebenfalls zur Vertikalen um 10° geneigt sein. Es ist jedoch ebenfalls möglich, diese Platte so anzuordnen, daß sie eine Neigung zur Horizontalen aufweist, die zwischen 20 und 80° liegt. Eine derartige Neigung der einzelnen Stufen kann auch bei der Konstruktion gemäß den Fig. 1 bis 6 verwirklicht werden.

Bei der Vorrichtung gemäß Fig. 1 sind vier Brennerleisten 36 angeordnet. Versuche haben gezeigt, daß bei einer Verwendung der Vorrichtung zum thermischen Behandeln von Spielsand und zum Trocknen von Klärschlamm eine höhere Anzahl von Brennerleisten günstig ist. So wurde von einem unabhängigen Institut eine Probe von Spielsand untersucht, die mit einer Vorrichtung gemäß Fig. 1 behandelt worden war, in der sieben Brennerleisten 36 parallel zueinander angeordnet waren. Dabei ergab die Untersuchung, daß der zuvor stark durch Mikroorganismen und Wurmeier verseuchte Spielsand nach der Behandlung in einem hygienisch einwandfreien Zustand war, der zudem deutlich besser ist, als Zustand von frisch angelieferten, also "neuem" Spielsand. Dabei haben diese Versuche auch gezeigt, daß die Vorrichtung selbst dann noch sehr gute Ergebnisse liefert, wenn der Sand, z.B. durch Regen, feucht ist.

Wird die Vorrichtung zum Trocknen von Klärschlamm verwendet, wird die Anzahl der Brennerleisten nach dem gewünschten Trocknungsergebnis bemessen. So hat sich gezeigt, daß mit ebenfalls sieben Brennerleisten, die parallel zueinander angeordnet sind, eine weitgehende Trocknung des Klärschlammes möglich ist.

## Patentansprüche

1. Vorrichtung zur thermischen Behandlung von lockerem Gut, wie Erde, Sand, Klärschlamm, Kies und dgl. mit:
einer Aufnahmeeinrichtung (12), in welcher das lockere Gut (58) aufgenommen wird;
einer Zuführeinrichtung (45), durch welche das lockere Gut der Aufnahmeeinrichtung im wesentlichen kontinuierlich zugeführt wird;
einer Schwingungs-Erzeugungs-Einrichtung (4, 5), welche mit dieser Aufnahmeeinrichtung verbunden ist und diese derart in Schwingungen versetzt, daß sich das lockere Gut in bezug auf die Aufnahmeeinrichtung bewegt, und
einer Brennereinrichtung (35), welche über dieser Aufnahmeeinrichtung angeordnet ist und welche das sich bewegende lockere Gut direkt beflammt und damit erhitzt,
**dadurch gekennzeichnet,**
daß die Aufnahmeeinrichtung eine Flächenanordnung aufweist, welche zumindest einen Flächenabschnitt beinhaltet, der in bezug zur Horizontalen geneigt ist,
daß diese Schwingungs-Erzeugungseinrichtung (4, 5) mit diesem zumindest einen Flächenabschnitt verbunden ist und diesen zumindest einen Flächenabschnitt derart in Schwingungen versetzt, daß das lockere Gut sich entlang der Neigung dieses Flächenabschnittes bewegt, und
daß die Brennereinrichtung (35) mindestens eine Brennerleiste (36) aufweist, die sich im wesentlichen quer zur Bewegungsrichtung des lockeren Gutes erstreckt, und die eine Vielzahl von Austrittsöffnungen (41) für das Brennmaterial aufweist, die im wesentlichen auf diese Flächenanordnung hin gerichtet ist.

2. Vorrichtung gemäß Anspruch 1, **dadurch gekennzeichnet**, daß die Flächenanordnung der Aufnahmeeinrichtung zumindest zwei Flächenabschnitte (22, 24, 26, 28, 30) beinhaltet, die zur Horizontalen geneigt sind, wobei das, in Bewegungsrichtung des lockeren Gutes gesehene untere Ende des ersten Flächenabschnittes (22) derart vertikal über dem Anfang des oberen Endes des zweiten Flächenabschnittes (24) angeordnet ist, daß das sich auf dem ersten Flächenabschnitt (22) bewegende lockere Gut (58) vom ersten Flächenabschnitt auf den zweiten Flächenabschnitt gelangt.

3. Vorrichtung gemäß Anspruch 1 oder 2, **dadurch gekennzeichnet**, daß die Flächenanordnung der Aufnahmeeinrichtung als Stufenplatte ausgebildet ist, wobei der Übergang von dem zumindest ersten Flächenabschnitt (22) zu zumindest einem zweiten Flächenabschnitt (24) über eine, eine Stufe bildende Platte erfolgt, deren Neigung zur Horizontalen stärker ist als die Neigung des ersten Flächenabschnittes (22) und die Neigung des zweiten Flächenabschnittes (24) und die mit diesem ersten und diesem zweiten Flächenabschnitt verbunden ist.

4. Vorrichtung gemäß Anspruch 2 oder 3, **dadurch gekennzeichnet**, daß mindestens drei Flächenabschnitte (22, 24, 26, 28, 30) vorgesehen sind, welche, in Bewegungsrichtung des lockeren Gutes gesehen, hintereinander angeordnet sind.

5. Vorrichtung gemäß Anspruch 1, **dadurch gekennzeichnet**, daß die Brennereinrichtung (35) zumindest zwei, vorzugsweise aber drei oder mehr Brennerleisten (36) aufweist.

6. Vorrichtung gemäß mindestens einem der Ansprüche 2 bis 5, **dadurch gekennzeichnet**, daß diese Brennereinrichtung (35) bzw. dieser Brennerleiste(n) (36) im Übergangsbereich zwischen diesem zumindest ersten (22) und diesem zumindest zweiten (24) Flächenabschnitt und/oder einem der Übergangsbereiche der folgenden Flächenabschnitte (26, 28, 30) angeordnet ist.

7. Vorrichtung gemaß mindestens einem der Ansprüche 1 bis 6, **dadurch gekennzeichnet**, daß die Neigung dieser Flächenabschnitte (22, 24, 26, 28, 30) in bezug zur Horizontalen zwischen 5 und 15°, vorzugsweise zwischen 9 und 11°, beträgt.

8. Vorrichtung gemäß mindestens einem der Ansprüche 1 bis 7, **dadurch gekennzeichnet**, daß diese Zuführeinrichtung (45) eine mit einer Abstreifeinrichtung (56) zusammenwirkende Dosierwalze (50) aufweist, welche sich im wesentlichen quer zur Bewegungsrichtung dieses lockeren Gutes auf der Flächenanordnung erstreckt, wobei diese Dosierwalze einen zylindrischen Körper aufweist, auf welchem eine Vielzahl von Plattenabschnitten (53) vorgesehen sind, die sich parallel zur Achse des zylindrischen Körpers erstrecken und welche jeweils eine Kammer (54) zur Aufnahme des lockeren Gutes bilden.

9. Vorrichtung gemäß Anspruch 8, **dadurch gekennzeichnet**, daß die Dosierwalze (50) mittels einer Antriebseinrichtung mit veränderlicher Drehzahl antreibbar ist.

10. Vorrichtung gemäß einem der Ansprüche 8 oder 9, **dadurch gekennzeichnet**, daß die Zuführeinrichtung (45) einen Einfülltrichter (47) aufweist, und daß diese Dosierwalze (50) im unteren Bereich dieses Einfülltrichters drehbar gelagert ist.

11. Vorrichtung gemäß einem der Ansprüche 1 bis 7, **dadurch gekennzeichnet**, daß die Zuführeinrichtung (45) einen Einfülltrichter (47) aufweist, der oberhalb dieser Flächenanordnung angeordnet ist.

12. Vorrichtung gemäß Anspruch 11, **dadurch gekennzeichnet**, daß in diesem Einfülltrichter (45) ein erster Sensor angeordnet ist, der ein elektrisches Signal an eine Steuereinrichtung ausgibt, wenn der Einfülltrichter bis zu einem vorgegebenen maximalen Füllstand gefüllt ist, sowie einen zweiten Sensor, der ein Signal an die Steuereinrichtung ausgibt, wenn der Füllstand des lockeren Gutes im Einfülltrichter einen vorgegebenen minimalen Wert erreicht, und daß die Zuführeinrichtung weiterhin eine Fördereinrichtung aufweist, welche von dieser Steuereinrichtung derart gesteuert wird, daß sich der Füllstand des lockeren Gutes im Einfülltrichter während des Betriebes zwischen diesem vorgegebenen minimalen und diesem vorgegebenen maximalen Wert befindet.

13. Vorrichtung gemäß mindestens einem der Ansprüche 1 bis 12, **dadurch gekennzeichnet**, daß diese Schwingungs-Erzeugungseinrichtung elektromagnetisch betätigt ist und mit einer Frequenz zwischen 25 und 100, vorzugsweise zwischen 45 und 55 Hz, schwingt.

14. Vorrichtung gemäß mindestens einem der Ansprüche 1 bis 12, **dadurch gekennzeichnet**, daß diese Schwingungs-Erzeugungseinrichtung einen mit einer Unwucht rotierenden Körper aufweist.

15. Vorrichtung gemäß mindestens einem der Ansprüche 1 bis 14, **dadurch gekennzeichnet**, daß die Aufnahmeeinrichtung (12) aus einer einstückig geformten Stufenplatte (14) besteht, welche mit Seitenplatten (31, 32) versehen ist, um ein Abgleiten des lockeren Gutes quer zu dieser Bewegungsrichtung zu verhindern, und daß diese Stufenplatte mit Stützen (9, 10) auf einem Grundkörper gelagert ist, wobei zwischen diesen Stützen und diesem Grundkörper diese Schwingungs-Erzeugungseinrichtung (4, 5) vorgesehen ist.

16. Vorrichtung gemäß mindestens einem der Ansprüche 1 bis 15, **dadurch gekennzeichnet**, daß eine Steuereinrichtung vorgesehen ist, welche die Drehzahl dieser Dosierwalze und/oder die Leistung der Brennereinrichtung steuert.

17. Vorrichtung gemäß Anspruch 16, **dadurch gekennzeichnet**, daß die Steuereinrichtung mit Temperatursensoren verbunden ist, welche in diesen Flächenabschnitten im Bereich dieser Brennereinrichtung angeordnet sind und/oder mit einem Drehzahlgeber, welcher die Drehzahl der Dosierwalze erfaßt.

18. Vorrichtung gemäß mindestens einem der Ansprüche 1 bis 17, **dadurch gekennzeichnet**, daß diese Brennereinrichtung mit einem Gas-Luft- oder Gas-Sauerstoff-Gemisch betrieben wird.

19. Verwendung der Vorrichtung gemäß mindestens einem der Ansprüche 1 bis 18 zur Sterilisation von Erde.

20. Verwendung der Vorrichtung gemäß mindestens einem der Ansprüche 1 bis 18 zur Sterilisation von Spielsand, wie er auf Kinderspielplätzen und dergleichen verwendet wird.

21. Verwendung der Vorrichtung gemäß mindestens einem der Ansprüche 1 bis 18 zum Trocknen von Klärschlamm.

22. Verwendung der Vorrichtung gemäß mindestens einem der Ansprüche 1 bis 18 zur thermischen Dekontaminierung von verseuchtem Erdreich.

## Claims

1. Device for thermally treating loose materials, such as earth, sand, sewage sludge, gravel and the like, comprising:
a reception device (12) for receiving the loose material (58);
a supply device (45) by which the loose material is substantially continuously supplied to the reception device;
a vibration producing device (4,5), connected to said reception device for producing a vibration motion thereof which moves the loose material in respect to this reception device; and
a burner device (35) arranged above said reception device and which directly fires and heats the materials to be treated,
characterized in
that the reception device has a surface arrangement, having at least one surface section inclined with respect to the horizontal,
that said vibration producing device (4, 5) is connected with said at least one surface section and produces a vibration motion thereof which moves the loose material along the inclination of said surface section, and
that said burner device (35) comprises at least one burner rail extending substantially transverse to the direction of movement of the loose materials, said bruner rail having a plurality of output openings for the burning substance directed substantially onto the surface arrangement.

2. Device according to claim 1, characterised in that the surface arrangement of the reception device has at least two surface sections inclined with respect to the horizontal whereby the lower end of the first surface section seen in the direction of movement of the loose materials is arranged vertically over the beginning of the upper end of the second surface section in such a way that the loose materials moving on the first surface section reaches the second surface section from the said first section.

3. Device according to claim 1 or 2, characterised in that the surface arrangement of the reception is formed as a step plate whereby the transition from said at least first surface section to at least a second surface section takes place over a plate formed as a step, whose inclination to the horizontal is greater as the inclination of the first surface section and the second surface section, and is connected with said first and said second surface sections.

4. Device according to claim 2 or 3, characterised in that at least three surface sections are provided arranged one after the other seen in the direction of movement of loose material.

5. Device according to claim 1, characterised in that the burner arrangement comprises at least 2, preferably 3 or more, burner rails.

6. Device according to at least one of claims 2 to 5, characterised in that said burner arrangement and respectively said burner rail(s) are located in the transition extending betwen said at least first and said at least second surface section and/or one of the transition regions of the surface sections which follow thereafter.

7. Device according to at least one of claims 1 to 6, characterised in that the inclination of said surface sections with respect to the horizontal amount to between 5 and 15 degrees, preferably, between 9 and 11 degrees.

8. Device according to at least one of claims 1 to 7, characterized in that said supply arrangement comprises a measuring drum, integrated with a stripping device and which extends substantially transverse to the direction of movement of said loose materials on the surface arrangement, whereby the said measuring drum has a cylindrical body having a plurality of plate sections provided thereon which extend parallel to the axis of the cylindrical body and form a respective chamber for receiving the loose materials.

9. Device according to claim 8, characterized in that the measuring drum can be driven at different speeds of rotation by means of a driving device.

10. Device according to one of claims 8 or 9, characterized in that the supply arrangement has a hopper, and that said measuring drum is rotatably fixed in the region below said hopper.

11. Device according to one of claims 1 to 7, characterised in that the supply arrangement has a hopper arranged above the said surface arrangement.

12. Device according to claim 11, characterized in that a first sensor is arranged in said hopper which outputs an electrical signal to a control device, when the hopper is filled to a predetermined maximum filled condition as well as a second sensor which outputs a signal to the control device when the filling condition of the loose materials in the hopper reaches a predetermined minimum value, and that the supply arrangement further comprises a conveying arrangement which is controlled by said control device in such a way that the filling condition of the loose materials in the hopper during operation is found to be between said predetermined minimum and said predetermined maximum value.

13. Device according to at least one of claims 1 to 12, characterised in that said vibrating producing device is electromagnetically operated and vibrates with a frequency between 25 and 100 Hz, preferably, between 45 and 55 Hz.

14. Device according to at least one of claims 1 to 12, characterised in that said vibrating producing device comprises an unbalanced rotating body.

15. Device according to at least one of claims 1 to 14, characterised in that the reception device is made from a step plate formed as a single piece having side plates in order to prevent a sliding off of the loose materials transverse to the direction of movement, and that said step plate is fixed by means of supports onto a main body whereby said vibrating producing device is provided between said supportds and said main body.

16. Device according to at least one of claims 1 to 15, characterised in that a control device is provided which controls the speed of rotation of said measuring drum and/or the power output of the burner arrangement.

17. Device according to claim 16, characterised in that the control device is connected with temperature sensors which are located in said surface sections in the region of said burner arrangement and/or with an impulse transmitter for detecting the speed of rotation of the measuring drum.

18. Device according to at least one of claims 1 to 17, characterised in that said burner arrangement is operated with a gas-air or gas-oxygen-mixture.

19. Use of the device according to at least one of claims 1 to 18, for sterilizing earth.

20. Use of the device according to at least one of claims 1 to 18, for sterilizing sand from sand boxes as is used in childrens playing grounds and the like.

21. Use of the device according to at least one of claims 1 to 18, for drying sewage sludge.

22. Use of the device according to at least one of claims 1 to 18, for thermally decontaminating contaminated earth soil.

## Revendications

1. Dispositif pour le traitement thermique de matières meubles, comme de la terre, du sable, des boues de curage, du gravier ou similaires, comprenant :
- un dispositif de réception (12) dans lequel les matières meubles (58) sont reçues ;
- un dispositif d'amenée (45) à travers lequel les matières meubles sont amenées sensiblement en continu dans le dispositif de réception ;
- un dispositif de production de vibrations (4, 5) qui est relié à ce dispositif de réception et met celui-ci en vibration de telle façon que les matières meubles se déplacent par rapport au dispositif de réception ; et
- un dispositif à brûleur (35) qui est agencé au-dessus de ce dispositif de réception et dont la flamme est dirigée directement sur les matières meubles en déplacement et réchauffe ainsi ces dernières, caractérisé en ce que :
- le dispositif de réception comporte un système de surfaces qui comporte au moins un secteur de surface qui est incliné par rapport à l'horizontale,
- ledit dispositif de production de vibrations (4, 5) est relié à ce secteur de surface et met celui-ci en vibration de telle façon que les matières meubles se déplacent le long de la pente de ce secteur de surface, et
- ledit dispositif à brûleur (35) comporte au moins une rampe de brûleurs (36) qui s'étend sensiblement perpendiculairement à la direction de déplacement des matières meubles, et qui présente une pluralité d'ouvertures de sortie (41) pour le matériau combustible, qui sont dirigées sensiblement vers ce système de surfaces.

2. Dispositif selon la revendication 1, caractérisé en ce que le système de surfaces du dispositif de réception comporte au moins deux secteurs de surface (22, 24, 26, 28, 30) qui sont inclinés par rapport à l'horizontale, et l'extrémité inférieure du premier secteur de surface (22), vue en direction de déplacement des matières meubles (58), est agencée verticalement au-dessus du début de l'extrémité supérieure du second secteur de surface (24), de sorte que les matières meubles (58) qui se déplacent sur le premier secteur de surface (22) passent du premier secteur de surface au second secteur de surface.

3. Dispositif selon l'une ou l'autre des revendications 1 et 2, caractérisé en ce que le système de surface du dispositif de réception est réalisé sous forme d'une plaque à gradins, la transition du premier secteur de surface (22) au second secteur de surface (24) se produisant via une plaque qui réalise un gradin, dont la pente par rapport à l'horizontale est plus forte que la pente du premier secteur de surface (22) et que la pente du second secteur de surface (24), et qui est reliée à ce premier et à ce second secteur de surface.

4. Dispositif selon l'une ou l'autre des revendications 2 et 3, caractérisé en ce qu'il est prévu au moins trois secteurs de surface (22, 24, 26, 28, 30) qui sont agencés les uns derrière les autres, vus dans la direction de déplacement des matières meubles.

5. Dispositif selon la revendication 1, caractérisé en ce que le dispositif à brûleur (35) comprend au moins deux, mais de préférence trois rampes de brûleurs (36) ou plus.

6. Dispositif selon l'une au moins des revendications 2 à 5, caractérisé en ce que ledit dispositif à brûleur (35), ou la ou lesdites rampes de brûleurs (36), est agencé dans la zone de transition entre ledit au moins un premier secteur de surface (22) et ledit au moins un second secteur de surface (24), et/ou dans l'une des zones de transition des secteurs de surfaces suivants (26, 28, 30).

7. Dispositif selon l'une au moins des revendications 1 à 6, caractérisé en ce que la pente de ces secteurs de surface (22, 24, 26, 28, 30) par rapport à l'horizontale s'élève entre 5 et 15°, de préférence entre 9 et 11°.

8. Dispositif selon l'une au moins des revendications 1 à 7, caractérisé en ce que ledit dispositif d'amenée (45) comporte un cylindre de dosage (50) qui coopère avec un dispositif de raclage (56), ledit cylindre s'étendant sensiblement transversalement à la direction de déplacement des matières meubles sur le système de surfaces et comportant un corps cylindrique sur lequel sont prévus une pluralité de tronçons de plaques (53) qui s'étendent parallèlement à l'axe du corps cylindrique et qui forment respectivement une chambre (54) pour recevoir les matières meubles.

9. Dispositif selon la revendication 8, caractérisé en ce que le cylindre de dosage (50) est susceptible d'être entraîné au moyen d'un dispositif d'entraînement à une vitesse de rotation variable.

10. Dispositif selon l'une ou l'autre des revendications 8 et 9, caractérisé en ce que le dispositif d'amenée (45) comporte une trémie de remplissage (47), et en ce que ledit cylindre de dosage (50) est monté en rotation dans la région inférieure de cette trémie de remplissage.

11. Dispositif selon l'une des revendications 1 à 7, caractérisé en ce que le dispositif d'amenée (45) comporte une trémie de remplissage (47) qui est agencée au-dessus de ce système de surfaces.

12. Dispositif selon la revendication 11, caractérisé en ce qu'un premier capteur est agencé dans cette trémie de remplissage (45), lequel délivre un signal électrique à un dispositif de commande lorsque la trémie de remplissage est remplie jusqu'à un niveau de remplissage maximum prédéterminé, ainsi qu'un second capteur qui délivre un signal au dispositif de commande lorsque le niveau de remplissage des matières meubles dans la trémie de remplissage atteint une valeur minimum prédéterminée, et en ce que le dispositif d'amenée comprend en outre un dispositif de transport qui est commandé par ce dispositif de commande de sorte que le niveau de remplissage des matières meubles dans la trémie de remplissage soit situé pendant le fonctionnement entre cette valeur minimum prédéterminée et cette valeur maximum prédéterminée.

13. Dispositif selon l'une au moins des revendications 1 à 12, caractérisé en ce que ledit dispositif de production de vibrations est actionné par voie électromagnétique et vibre avec une fréquence comprise entre 25 et 100 Hz, de préférence entre 45 et 55 Hz.

14. Dispositif selon l'une au moins des revendications 1 à 12, caractérisé en ce que ledit dispositif de production de vibrations comporte un corps en rotation avec un balourd.

15. Dispositif selon l'une au moins des revendications 1 à 14, caractérisé en ce que le dispositif de réception (12) est constitué par une plaque à gradins (14) formée d'une seule pièce, qui est pourvue de plaques latérales (31, 32), afin d'empêcher un glissement des matières meubles transversalement à cette direction de déplacement, et en ce que ladite plaque à gradins est montée au moyen de supports (9, 10) sur un corps de base, ledit dispositif de production de vibrations (4, 5) étant prévu entre ces supports et ce corps de base.

16. Dispositif selon l'une au moins des revendications 1 à 15, caractérisé en ce qu'il est prévu un dispositif de commande qui commande la vitesse de rotation dudit cylindre de dosage et/ou la puissance du dispositif à brûleur.

17. Dispositif selon la revendication 16, caractérisé en ce que le dispositif de commande est relié à des capteurs de température qui sont agencés dans lesdits secteurs de surface dans la région dudit dispositif à brûleur, et/ou à un capteur de rotation, qui détecte la vitesse de rotation du cylindre de dosage.

18. Dispositif selon l'une au moins des revendications 1 à 17, caractérisé en ce que ledit dispositif à brûleur est alimenté avec un mélange de gaz et d'air, ou bien un mélange de gaz et d'oxygène.

19. Application du dispositif selon l'une au moins des revendications 1 à 18 à la stérilisation de terre.

20. Application du dispositif selon l'une au moins des revendications 1 à 18 à la stérilisation de sable à jouer, tel qu'il est utilisé dans des aires de jeux pour les enfants, ou similaire.

21. Application du dispositif selon l'une au moins des revendications 1 à 18 au séchage de boues de curage.

22. Application du dispositif selon l'une au moins des revendications 1 à 18 à la décontamination thermique de terre contaminée.
